# EUROPEAN PATENT SPECIFICATION

(11) **EP 1 163 766 B1**
(45) Date of publication and mention of the grant of the patent: **06.08.2003**
(21) Application number: 00918992.9
(22) Date of filing: 30.03.2000
(51) Int. Cl.: H04L 12/58, H04L 12/28

(54) **A DATA TRANSFER MANAGEMENT SYSTEM AND METHOD FOR A TELECOMMUNICATIONS NETWORK**
SYSTEM UND VERFAHREN ZUR VERWALTUNG VON DATENÜBERTRAGUNG IN EINEM TELEKOMMUNIKATIONSNETZWERK
SYSTEME DE GESTION DE TRANSFERT DE DONNEES ET PROCEDE POUR RESEAU DE TELECOMMUNICATIONS

(30) Priority: 31.03.1999 GB 9907413
(43) Date of publication of application: 19.12.2001
(73) Proprietor: Roper, Geoffrey Hugh, Bath, Avon BA1 2US (GB)
(72) Inventor: Roper, Geoffrey Hugh, Bath, Avon BA1 2US (GB)
(74) Representative: Horner, David Richard
(86) International application number: GB0001213
(87) International publication number: WO00059258

(56) References cited:
- WO-A-97/22936
- US-A- 5 771 353

## Description

### Field of the Invention

The present invention relates to a data transfer management system and method for a telecommunications network, and more particularly to a technique for transferring data from a caller device to a recipient device via a telecommunications network.

### Background of the Invention

In a typical telecommunications system, a telecommunications network is provided to enable users to make calls to one another, or indeed via appropriate links to make calls to users of other telecommunications systems. When a call is to be made from a caller to a recipient, then a number of elements of the telecommunications network infrastructure are typically employed to create a dedicated telecommunications link between the caller and the recipient.

Such a dedicated link is required in order to allow voice data or other types of data to be passed between the caller and recipient as and when required during the duration of the call, and accordingly it will be appreciated that network resources will need to be allocated to that call for the duration of the call.

As more and more users use telecommunications networks not only for voice calls, but also for the transfer of many different types'of data between users, the demand on the telecommunications network infrastructure is increasing. Further, the demand on the network infrastructure can vary considerably between peak periods of use, for example during the working day, and periods of low usage, for example during the night. Hence, it is becoming more and more difficult for the telecommunications system provider to provide a good level of service to all users whilst using a network infrastructure that has limited capacity. WO-A-97/22936 discloses a system including a rate governor for monitoring and controlling the amount of communications between a remote communication unit and a communication server.

Accordingly, it is an object of the present invention to provide a technique for managing the transfer of data over the telecommunications network whilst making more efficient use of the available network capacity.

### Summary of the Invention

Viewed from a first aspect, the present invention provides a data transfer management system for a telecommunications network, comprising: a request handler for receiving a request from a caller device for a transfer of a plurality of blocks of data to a recipient device via the telecommunications network; a network capacity indicator for receiving an indication of available network capacity; buffering means arranged to determine, having regard to said network capacity indication, when to retrieve from the caller device each block of data, the buffering means being arranged to cause each retrieved block of data to be stored in a storage device; transfer means for indicating to the recipient device that the data transfer management system has data for the recipient device, and for determining, having regard to the network capacity indication, when to transmit each block of data from the storage device to the recipient device; whereby the plurality of blocks of data are transferred from the caller device to the recipient device via the telecommunications network under control of the data transfer management system having regard to available network capacity.

Whilst various types of communication between a caller device and a recipient device will require a dedicated link between the caller device and the recipient device to allow real-time transfer of data between the caller device and the recipient device (e.g. a voice communication), there are many instances in which the data to be sent by the caller device does not immediately need to be received by the recipient device. An example would be e-mail communication. The present invention provides a data transfer management system for centrally managing the transfer of such data between a caller device and a recipient device, in order to make more efficient use of the available network capacity of the telecommunications network.

Accordingly, in accordance with the present invention, if a caller device wishes to transfer a plurality of blocks of data to a recipient device, and the exact timing of that transfer is not critical, then the caller device is arranged to request a data transfer management system to handle the transfer of that data. The data transfer management system is arranged to receive an indication of available network capacity, and employs a buffering means to determine, having regard to the network capacity indication, when to retrieve each block of data from the caller device. Further, the buffering means causes each retrieved block of data to be stored in a storage device.

The indication of available network capacity made available to the buffering means may take a variety of forms. For example, as will be appreciated by those skilled in the art, it is known to provide elements within a telecommunications network to monitor available network capacity, and accordingly the data transfer management system may be provided with a network capacity indicator for receiving a real-time indication of available network capacity from such an element of the telecommunications network. However, in some implementations, it may not be necessary for the data transfer management system to have such a precise indication of available network capacity, and alternatively the indication of available network capacity may take some other form, for example an estimate of available network capacity may be generated based on the time of day, and statistics indicating the general usage of the telecommunications network at various times of the day.

In addition to the buffering means, the data transfer management system is also provided with transfer means for indicating to the recipient device that the data transfer management system has data for the recipient device. The transfer means may be arranged to only contact the recipient device once all of the plurality of blocks of data have been stored by the buffering means in the storage device, or alternatively may be arranged to contact the recipient device at some time prior to all of the plurality of blocks of data being stored.

Further, the transfer means is arranged to determine, having regard to the network capacity indication, when to transmit each block of data from the storage device to the recipient device. By this approach, it will be appreciated that the plurality of blocks of data are transferred from the caller device to the recipient device via the telecommunications network under control of the data transfer management having regard to available network capacity. The caller device merely places the request with the data transfer management system, and the data transfer management system then takes control of the data transfer.

Indeed in preferred embodiments, once the request has been accepted by the data transfer management system, the user of the caller device need take no further steps in connection with the data transfer, but rather the data transfer will occur as a background task without any input from the user.

It will be appreciated that the blocks of data may or may not be of a fixed size. If the telecommunications network is a digital wireless telecommunications network such as the GSM network, each block of data will be transferred as a number of data units via the transport layer.

The request from the caller device to the request handler of the data transfer management system may take a variety of forms. However, in preferred embodiments, the request from the caller device comprises a call identifying a number of predetermined attributes relating to the transfer. Hence, for example, the user of the caller device may establish a call to the data transfer management system to enable the necessary details of the data transfer to be provided, and the call would then typically be terminated once the request has been accepted by the data transfer management system. In preferred embodiments, the predetermined attributes are provided within a header field.

In preferred embodiments, one of said predetermined attributes is a priority indication identifying a priority to be associated with the transfer, the data transfer management system further comprising a scheduler responsive to the priority indication to determine when to employ the buffering means and transfer means to retrieve the blocks of data from the caller device and to transmit the blocks of data to the recipient device.

It will be appreciated by those skilled in the art that the priority indication may take a variety of forms. For example, in a similar way to posting a letter, the user of the caller device may be able to specify the data transfer as first class, second class, etc dependent on how quickly he/she wishes the data to be passed to the recipient device. Clearly, different charges could be levied for different priorities. The scheduler within the data transfer management system would typically receive priority details for all of the data transfer requests currently being handled by the data transfer management system, and would schedule the various data transfers accordingly. The scheduler would then control when the buffering means is used to retrieve the blocks of data from the caller device, and when the transfer means is used to transmit each block of data to the recipient device.

In preferred embodiments, irrespective of whether a priority indication is provided, the predetermined attributes will comprise an indication of the size of data to be transferred and an indication of the recipient device, the request handler being arranged to indicate to the caller device that the request has been accepted if the request handler determines that there is sufficient available space in the storage device for the plurality of blocks of data.

Hence, in preferred embodiments. the data transfer management system will only accept a request if there is sufficient space in the storage device for the plurality of blocks of data. However, it will be appreciated that such a requirement is not essential, and other criteria could be applied. For instance, as long as sufficient space in the storage device is available for a certain proportion of the plurality of blocks of data, the request could be accepted. In this instance, once that portion had been retrieved, the transfer means would need to be employed to start transmitting the data to the recipient device, before further blocks of data could be retrieved from the caller device.

Preferably, upon accepting the request, the predetermined attributes are stored by the data transfer management system, and a portion of the storage device is reserved for the plurality of blocks of data. Accordingly, the data transfer management system will then have all of the necessary information to enable it to manage the data transfer, and the necessary space in the storage device will have been reserved for the blocks of data. Thus. at this point, the call between the caller device and the data transfer management system can be terminated.

Typically, a single request will concern the transfer of a plurality of blocks of data to a single specified recipient device. However, the predetermined attributes may specify a plurality of recipient devices, in which event the transfer means will be arranged to transmit the blocks of data to each recipient device.

In preferred embodiments, the buffering means is arranged, when the network capacity indication indicates that the available network capacity is at least a predetermined threshold, to request one or more blocks of data from the caller device and to perform a verify procedure on the one or more blocks of data when received from the caller device. The predetermined threshold may be chosen based on a variety of criteria. For example, the predetermined threshold may be chosen such that as soon as the available network capacity is sufficient to allow the transfer of a block of data, then the buffering means is arranged to request a block from the caller device.

However, alternatively, it may be desired that the threshold is chosen such that a block of data is only requested from the caller device if the available network capacity is significantly larger than that required for the block of data. In a typical embodiment, the data transfer would be assigned a low priority, and so, for example, the data transfer would be dropped if necessary to support a new voice call. Hence, by choosing the threshold as above, this would allow some safety margin if network capacity were to increase whilst the block of data is being transferred. It will also be appreciated that the predetermined threshold could be chosen to have different values for different priority data transfers.

Preferably, the buffering means is arranged to re-request the one or more blocks of data from the caller device if the verify procedure indicates an error in the one or more blocks of data as received, and to store the one or more blocks of data in the storage device if the verify procedure indicates that the one or more blocks of data as received are correct. As will be appreciated by those skilled in the art, a number of known verify procedures could be employed, for example by appropriate checking of a checksum value included in the block of data received.

The manner in which the transfer means contacts the recipient device may take a variety of forms. However, in preferred embodiments, the transfer means is arranged to call the recipient device to indicate that the data transfer management system has data for the recipient device, the call identifying predetermined data information. In preferred embodiments, the predetermined data information is provided within a header field.

Preferably the predetermined data information identifies the size of the data and indication of the caller device. Further, in preferred embodiments. the transfer means is arranged to await an accept signal from the recipient device accepting the data before beginning to transmit the data to the recipient device. Hence, in preferred embodiments. the user of the recipient device receives some form of prompt that the data transfer management system has data destined for that device, and the user is able to accept or decline that data. Typically, a message may be displayed to the user of the recipient asking for confirmation that the user wishes to accept the data.

In preferred embodiments, the transfer means is arranged, when the network capacity indication indicates that the available network capacity is at least a predetermined threshold, to send one or more blocks of data to the recipient device. As discussed earlier with reference to the buffer means, the predetermined threshold above which the transfer means is arranged to send one or more blocks of data can be chosen as appropriate, dependent on a number of factors.

Preferably, the recipient device is arranged to perform some verification of the data it receives. Accordingly, in such preferred embodiments, the transfer means is arranged to resend the one or more blocks of data to the recipient device upon receipt of a resend signal from the recipient device.

In preferred embodiments of the present invention, the caller and/or recipient device used in combination with the data transfer management system has a data transfer interface mechanism for communicating with the data transfer management system, the data transfer interface mechanism comprising: a transmission controller arranged, when data is to be transferred from the device, to issue the request to the data transfer management system identifying predetermined attributes relating to the transfer; and a reception controller arranged, when data is to be received by the device, to be responsive to the transfer means of the data transfer management system to receive the blocks of data for storage at a predetermined location accessible by the device.

The transmission controller and reception controller may take a variety of forms, either hardware, software, or a mixture of both. However, in preferred embodiments, the transmission controller and reception controller are embodied by a number of software routines executable on a processor within the caller/recipient device to enable the caller/recipient device to communicate with the data transfer management system.

In preferred embodiments, the reception controller is responsive to an indication from the transfer means that the data transfer management system has data for the recipient device to request confirmation from a user of the device that the data should be transferred to the recipient device before issuing an accept signal to the transfer means.

Additionally, it is clear that if the device is to receive data from the data transfer management system, then an appropriate storage location for that data accessible by the device must be provided. This could be achieved by setting up of a default storage location for such data. However, alternatively, the reception controller may be further arranged to seek confirmation from the device user of a storage location for the data before issuing the accept signal to the transfer means.

Preferably, the reception controller is arranged to perform a verify procedure on the blocks of data as received, and to issue a resend signal to the data transfer management system to request the transfer means to resend any block or blocks of data which the verify procedure indicates are not correct.

In preferred embodiments, the transmission controller is arranged, upon an indication from a user of the device that data is to be transferred from the device to a recipient device, to establish a call with the request handler and to send a number of predetermined attributes relating to the transfer to the request handler. Further, upon receipt of an indication from the request handler that the request has been accepted, the transmission controller is preferably arranged to terminate the call, thereby allowing the device user to make subsequent calls.

Viewed from a second aspect, the present invention provides a method of transferring data in a telecommunications network, comprising: receiving a request from a caller device for a transfer of a plurality of blocks of data to a recipient device via the telecommunications network; employing a buffering means to determine, having regard to an indication of available network capacity, when to retrieve from the caller device each block of data; temporarily storing each retrieved block of data in a storage device; indicating to the recipient device that data is available for the recipient device; employing a transfer means to determine, having regard to the network capacity indication, when to transmit each block of data from the storage device to the recipient device; whereby the plurality of blocks of data are transferred from the caller device to the recipient device via the telecommunications network having regard to available network capacity.

Viewed from a third aspect, the present invention provides a method of operating a caller and/or recipient device to communicate with the data transfer management system of the first aspect of the present invention, the caller and/or recipient device having a data transfer interface mechanism, and the method comprising the steps of: when data is to be transferred from the device, employing a transmission controller within the data transfer interface mechanism to issue the request to the data transfer management system identifying predetermined attributes relating to the transfer; when data is to be received by the device, being responsive to the data transfer management system to receive via a reception controller within the data transfer interface mechanism the blocks of data; and storing the received blocks of data at a predetermined location accessible by the device; whereby the blocks of date are transferred under control of the data transfer management system having regard to available network capacity.

Viewed from a further aspect, the present invention provides a computer program configured in operation to perform the method of the second or third aspect.

### Brief Description of the Drawings

The present invention will be described further, by way of example only, with reference to a preferred embodiment thereof as illustrated in the accompanying drawings, in which:
Figure 1 illustrates a telecommunications network incorporating a data transfer management system in accordance with a preferred embodiment of the present invention;
Figure 2A is a block diagram illustrating various logical elements employed within the data transfer management system in accordance with the preferred embodiment of the present invention;
Figure 2B illustrates an example of a caller or recipient device that may be used in the preferred embodiment of the present invention;
Figures 3A and 3B are flow diagrams illustrating how a request from a caller device for a transfer of a plurality of blocks of data to a recipient device is processed in accordance with a preferred embodiment of the present invention;
Figures 4A and 4B are flow diagrams illustrating how the blocks of data are transferred from the caller device to a storage device of the data transfer management system in accordance with a preferred embodiment of the present invention;
Figures 5A and 5B are flow diagrams illustrating how the data transfer management system indicates to the recipient device that data is available for reception in a preferred embodiment of the present invention; and
Figures 6A and 6B are flow diagrams illustrating how the blocks of data are transferred from the storage device to the recipient device in accordance with a preferred embodiment of the present invention.

### Description of a Preferred Embodiment

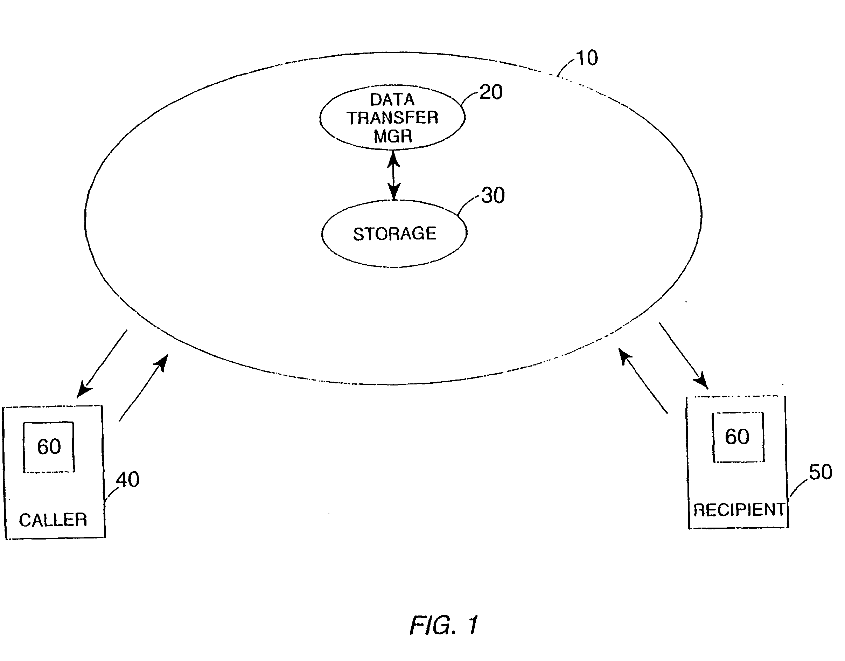

Figure 1 provides a schematic illustration of a telecommunications network incorporating a data transfer management system in accordance with a preferred embodiment of the present invention. When a caller device 40 is to send data to a recipient device 50, then the user of the caller device 40 may decide either to establish a direct call with the recipient device 50 to enable immediate transfer of the data, or alternatively may decide to route the data via the data transfer manager 20 if there is no need for the recipient device 50 to immediately receive the data.

One benefit to the caller of using the data transfer manager 20 is that only a short call is required at the time of making the request in order to log the request with the data transfer manager. Assuming the request is accepted, the call can then be terminated, and the caller is free to continue making further calls, hence avoiding the requirement for the caller device 40 to be tied up at that time in the transfer of data to the recipient device 50. Further, if the caller device 40 were to try and establish direct connection with the recipient 50, it may well be that the recipient device 50 is busy at that time, in which event the caller would have to make a note to retry the data transfer later. By using the data transfer manager 20, this problem is avoided, since once the data transfer request has been accepted, the data transfer manager 20 takes control of the data transfer, and the data will be transferred when the recipient device 50 is in a position to accept that data.

It will be appreciated that the network provider could also provide further incentives for the caller to use the data transfer manager 20 for any data that does not need immediate delivery to the recipient 50. For example, the billing structure could be arranged such that it would typically be cheaper for the caller device 40 to use the data transfer manager 20 to transfer the data, rather than to seek to establish a direct connection with the recipient 50 for the transfer of the data. Further, in preferred embodiments, a number of different priority services would be made available to the caller device 40, so that the caller could specify when making a request to the data transfer manager 20 the relative priority to be assigned to that data transfer, and the billing would reflect the priority of service requested. For example, if the caller were able to specify first class or second class delivery, then the billing would preferably be such that the transfer of a predetermined number of blocks of data via the first class service would cost more than the transfer of the same predetermined number of blocks via the second class service.

The links connecting the caller device 40 and the recipient device 50 with the telecommunications network 10 could take a variety of forms. For example, the caller device 40 and/or the recipient device 50 may be connected to conventional copper telephone lines, or may be connected with the telecommunications network 10 via wireless links. In preferred embodiments, it will be assumed that both the caller device 40 and the recipient device 50 are connected to a digital wireless telecommunications network such as a GSM network.

In preferred embodiments, both the caller device 40 and the recipient device 50 incorporate a data transfer interface mechanism 60 to enable those devices to interact with the data transfer manager 20. In preferred embodiments, the functions of the data transfer interface mechanism 60 are embodied as software routines executing on a processing unit within the caller 40 and recipient 50 devices. When the caller device 40 wishes to send data to the recipient device 50 via the data transfer manager 20, then it employs the data transfer interface mechanism 60 to send a signal to the data transfer manager 20 indicating that it has data to send. The data transfer manager 20 then communicates with the caller device 40 to establish the amount of data and the recipient device to which the data is to be sent. As will be discussed later. various priority information may also be specified by the caller device 40 at this stage which will determine how the data transfer manager 20 schedules the data transfer. Further, in preferred embodiments, the data transfer manager 20 establishes at this stage whether a storage device 30 to be used to buffer the data has enough capacity to store the data that the caller device 40 wishes to transfer.

If there is not sufficient storage capacity within the storage device 30, then the data transfer manager 20 indicates this to the caller device 40, and the call is cancelled. Otherwise, the data transfer manager 20 indicates to the data transfer interface mechanism 60 on the caller device 40 that the request has been accepted, and the call is then terminated.

In preferred embodiments, the data transfer manager 20 then schedules the data transfer having regard to all of the other data transfers that it may also be handling at that time. If the caller device 40 has specified certain priority information when making the request, then this will be taken into account when scheduling the data transfer.

The data transfer manager 20 is arranged to receive information about available network capacity within the telecommunications network 10. As will be appreciated by those skilled in the art, this information can be generated by standard components within the telecommunications network infrastructure, and then provided to the data transfer manager 20. When, having regard to the scheduling of the data transfer, it is determined that the data should be retrieved from the caller device 40 for storage in the storage device 30, then assuming that the available network capacity indication indicates that there is sufficient network capacity, the data transfer manager 20 contacts the caller device 40 via the data transfer interface mechanism 60 to request an amount of data specified by the data transfer manager 20. In preferred embodiments, this contact takes the form of a call transparent to the user of the caller device. Preferably, if the user starts to use the caller device to initiate a call whilst this background call is taking place, the background call is dropped, and the data transfer will then begin again with the transfer of the relevant block once the caller device is available again.

In preferred embodiments, the data will be transferred in blocks, each block containing a header portion identifying certain attributes of the block (e.g. block number, number of bytes of data in the block, etc), a data portion containing a portion of the data to be transferred, and a tail portion specifying data verification information such as a checksum. Assuming a GSM network is used in preferred embodiments, then each block will be transferred to the data transfer manager as a number of GSM data units.

Typically, the data transfer manager 20 will request one or more blocks of data from the caller device 40, having regard to the available network capacity at the time the request is made. It will be appreciated that the block sizes may be fixed or variable. If the blocks are a fixed size, then clearly the data transfer manager 20 only needs to specify the number of blocks to be transferred, whereas if the data blocks are a variable length, then information about the length of the blocks requested also needs to be provided. In preferred embodiments, the data transfer manager 20 only requests one block at a time,

As each block of data is retrieved from the caller device 40, it is stored in the storage device 30. The blocks of data may be routed via the data transfer manager 20 to the storage device 30, or alternatively may be routed directed from the caller device 40 to the storage device 30 over the telecommunications network 10. This process is repeated as and when network capacity permits until such time as all of the specified blocks of data have been retrieved from the caller device 40 and stored in the storage device 30.

The above process may be completed before the data transfer manager 20 makes contact with the recipient device 50 for the transfer of the data to the recipient device. However, in alternative embodiments, the data transfer manager 20 may make contact with the data transfer interface mechanism 60 of the recipient device 50 to begin the transfer of data from the storage device 30 to the recipient device 50 when only a portion of the data has been retrieved into the storage device 30 from the caller device 40.

When, having regard to the scheduling within the data transfer manager 20, it is decided to begin the transfer of the data from the storage device 30 to the recipient device 50, a call is made from the data transfer manager 20 to the recipient device 50, which is processed by the data transfer interface mechanism 60. If, for some reason, a call to the receiving device 50 is not possible (for example, because the receiving device is currently busy), the data is preferably retained for a preset amount of time within the storage device 30, and the data transfer manager 20 will continue periodically to try and establish connection with the receiving device 50. If, after the preset amount of time has expired, no call to the recipient device 50 has been possible, then in preferred embodiments, the data. is deleted, and the caller device 40 is notified that the data transfer manager 20 has been unable to deliver the data. It will be appreciated by those skilled in the art that other types of behaviour could be provided. For example, the recipient device 50 may be billed for data stored in the storage device 30 on a daily basis, and the data in the storage device 30 is stored until collected.

However, assuming a call is established from the data transfer manager to the recipient device 50, then the data transfer manager 20 will send a signal identifying certain predetermined information about the data transfer, for example the size of the data, and the identification of the caller device 40 sending the data. It will be appreciated that a number of other items of information could also be provided at this stage, for example the type of data being sent. The data transfer interface mechanism 60 will preferably cause this information to be displayed to the user of the recipient device 50, to give the user the opportunity to accept or decline the data.

Assuming the data is accepted, then as network capacity allows, the data transfer manager 20 will send the data to the recipient device in blocks of a predetermined size. In preferred embodiments, this is done via a call transparent to the user of the recipient device. Preferably, if the user starts to use the recipient device to initiate a call whilst this background call is taking place, the background call is dropped, and the data transfer will then begin again with the transfer of the relevant block once the recipient device is available again. This process is repeated as and when network capacity allows until such time as all of the data is transferred from the storage device 30 to the recipient device 50.

Once all the data has been transferred to the recipient, a signal may be sent from the data transfer manager 20 to the caller device 40 to indicate that the data transfer has been successful. Clearly, this is not essential, and indeed a number of other options are available. For example, the standard mechanism may be that no confirmation is sent to the caller device 40, and that the caller device 40 is only contacted if there has been any problem in transferring the data to the recipient device 50.

By the above approach, data which has been marked as non-urgent is passed from the caller device 40 to the recipient device 50 under the control of the data transfer manager 20 at a rate dependent on a number of parameters, such as the priority requested by the caller device, and the excess capacity of the network 10.

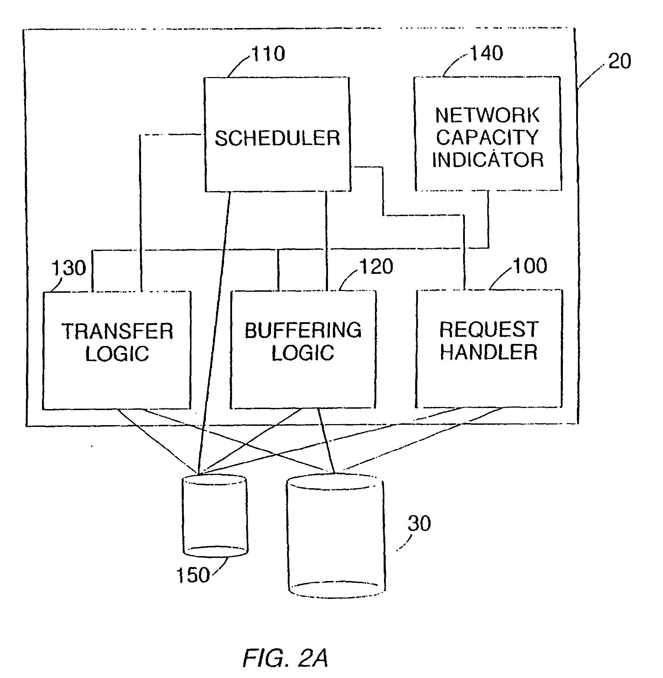

Figure 2A is a block diagram illustrating schematically the main functional elements employed within the data transfer manager 20 in accordance with preferred embodiments of the present invention. The request handler 100 is arranged to receive requests from caller devices 40 for the transfer of data to recipient devices 50. As mentioned previously, a number of attributes concerning the request are provided by the caller device 40, such as an indication of the file size (i.e. the number of blocks of data of a specified size to be transferred), an indication of the recipient device, and any priority indication to be used to handle the data transfer. It will be appreciated that a number of other attributes may also be provided, for example an indication of the type of data being transferred. Preferably, when processing the request, the request handler 100 determines whether sufficient space is available in the storage device 30 for the storage of the data, and assuming there is sufficient storage, the predetermined attributes relating to the call are stored within a storage device 150 for subsequent access by the data transfer manager 20. Further, details of the call are provided to the scheduler 110, to enable the scheduler to schedule the handling of that data transfer request having regard to the various other data transfer requests that may be ongoing.

The data transfer manager 20 also has a network capacity indicator 140 for providing an indication of the available network capacity. This may be arranged to receive dynamic network capacity information from the telecommunications network 10, or in alternative embodiments may be arranged to provide other information indicative of network capacity. For example, if statistics concerning the use of the telecommunications network 10 indicate that at certain times of the day, a significant portion of the telecommunications network 10 is often unused, then the network capacity indicator may be arranged to generate the network capacity indication based on those statistics, and the time of day.

The scheduler 110 is arranged to interact with buffering logic 120 and transfer logic 130, the buffering logic 120 being used to control the transfer of the blocks of data from the caller device 40 to the storage device 30, whist the transfer logic 130 is arranged to control the transfer of the data from the storage device 30 to the recipient device 50. Accordingly, both the buffering logic 120 and the transfer logic 130 have access to the storage devices 30 and 150 to enable the necessary information to be retrieved to control the transfer of the blocks of data.

In preferred embodiments, the data transfer manager 20 is provided by a processing device such as a server, and the various functional elements illustrated in Figure 2A are embodied by appropriate software control of the processing device hardware.

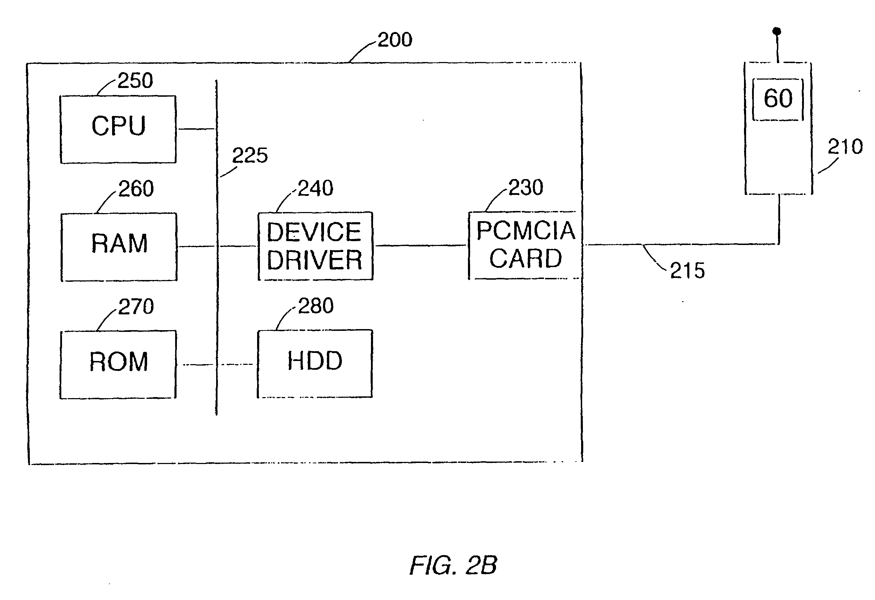

Figure 2B provides an example of a caller device 40 or recipient device 50 that may be used in preferred embodiments of the present invention. In this example, a computer system 200, such as a laptop computer is connected to a mobile telephone 210 via link 215. A bus 225 within the laptop computer 200 links a central processing unit (CPU) 250, a random access memory (RAM) 260, a read only memory (ROM) 270, a device driver 240 and hard disk drive (HDD) 280. In accordance with the preferred embodiment, the device driver 240 is connected to a PCMCIA data card 230 on which the necessary logic to enable the laptop computer 200 to interact with the mobile phone 210 is provided. As will be appreciated, in operation, software stored within the ROM 270 or RAM 260 may be executed by the CPU 250 to carry out predetermined operations. Software and data can be retrieved from the HDD 280 as and when required.

In accordance with preferred embodiments of the present invention, the data transfer interface mechanism 60 is installed on the mobile phone 210 to enable the device to interact with the data transfer manager 20 on the telecommunications network 10. As mentioned earlier, the data transfer interface mechanism 60 is preferably embodied by software routines executed on a processor within the mobile phone 210. When data is received from the data transfer manager 20 by the recipient device 50, then that data will preferably be routed to a predetermined location on the HDD 280, this location either being a predetermined location, or one selected by the user.

It will be appreciated that a separate mobile phone is not essential, as the PCMCIA card can incorporate all of the necessary mobile phone features. In that scenario, the data transfer interface mechanism 60 would also be incorporated within the PCMCIA card 230. Further, the caller and recipient devices need not be laptop computers, but could be any other suitable electrical device, such as a personal digital assistant (PDA) device, an electronic organiser, a digital camera, etc.

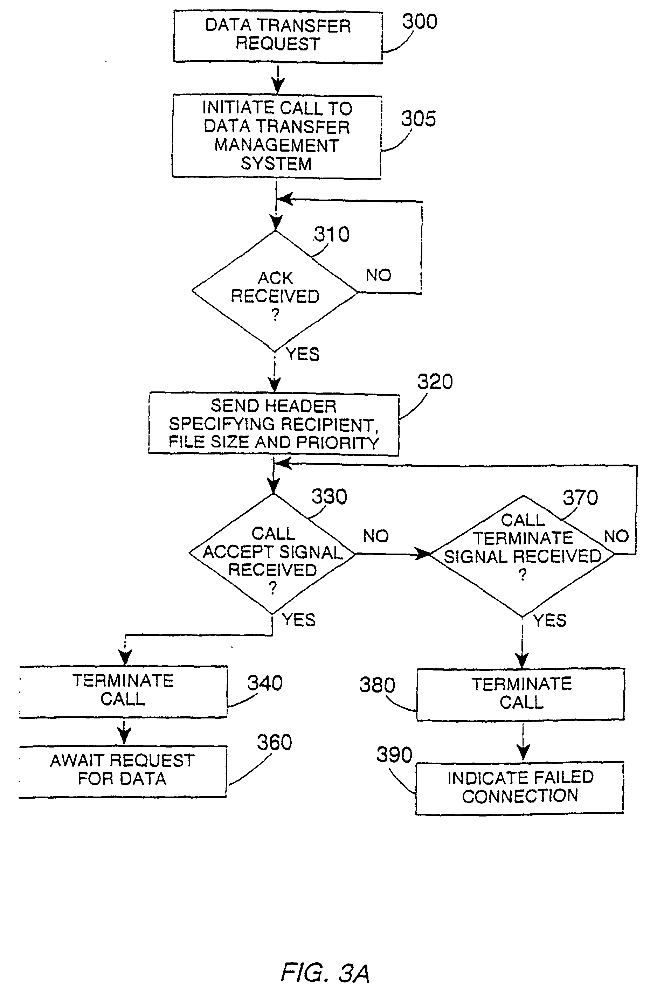

Having provided a general overview of the data transfer management system of preferred embodiments of the present invention, a more detailed discussion of the operation of the data transfer management system will now be described in more detail with reference to the flow diagrams of Figures 3A to 6B.

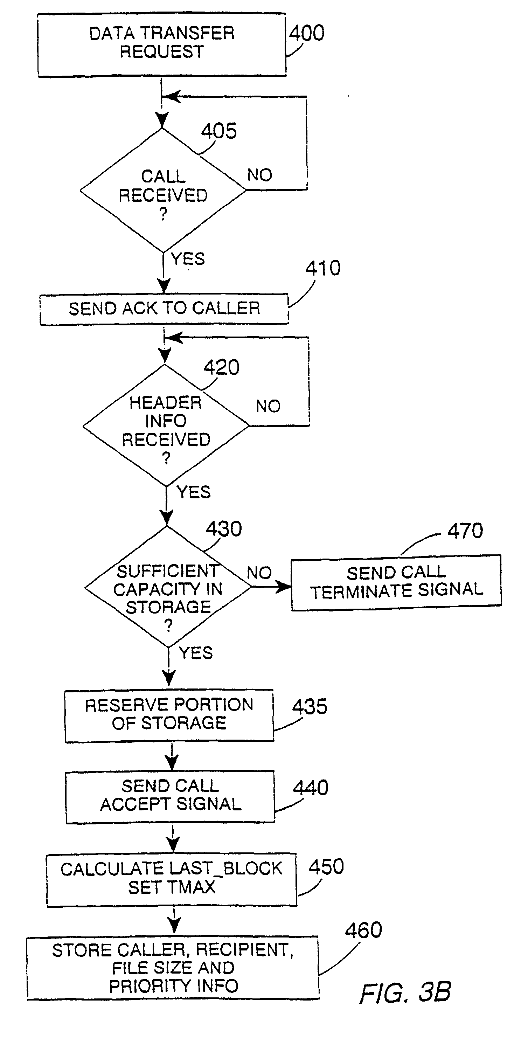

Figure 3A illustrates the process performed within the caller device 40 when making a data transfer request to the data transfer manager 20, whilst Figure 3B illustrates the corresponding processing performed within the data transfer management system 20. As illustrated in Figure 3A, when the caller devices wishes to make a data transfer request to the data transfer manager 20, then it enters an active mode where it initiates a call to the data transfer management system at step 305. As illustrated in Figure 3B, the data transfer manager 20 awaits receipt of such a call at step 405, and upon receipt of the call, sends an acknowledgement to the caller at step 410. As shown in Figure 3A, the caller awaits receipt of that acknowledgement at step 310, and upon receipt of the acknowledgement sends certain information to the data transfer manager 20 within a header field. In preferred embodiments, this information specifies the recipient device, the file size and the priority of the data transfer.

As illustrated in Figure 3B, the data transfer manager 20 awaits receipt of the header information at step 420, and upon receipt of the header information determines at step 430 whether there is sufficient capacity in the storage device 30 for the data to be transferred. If not, a call terminate signal is sent back to the caller at step 470. Otherwise, a portion of the storage device is reserved at step 435 for the receipt of that data, and a call accept signal is sent to the caller at step 440. The parameter "Last_Block" is then determined at step 450 based on the file size information, and also the value "Tmax" is set. Further, the caller, recipient, file size and priority information (along with any other specified information, such as file type) are stored in the storage 150 at step 460.

Returning to Figure 3A, it is determined at step 330 whether the call accept signal has been received. If it has, the call is terminated at step 340. At this point, the caller device then enters a passive mode where it awaits a request for data at step 360. The mode is passive since the caller can now make other outgoing calls, or accept incoming calls.

If at step 330, it is determined that the call accept signal has not been received, then at step 370 it is determined whether the call terminate signal has been received. If not, the process returns to step 330. If however the call terminate signal has been received, then the call is terminated at step 380, and at step 390 an indication of the failed connected is provided to the caller. In preferred embodiments, it is arranged that the call terminate signal provides an indication of the reason that the call has been terminated, and this information is displayed by the caller device 40 to the user.

In the example illustrated in Figures 3A and 3B, the call terminate signal is only issued if there is insufficient storage capacity in the storage 30. However, it will be appreciated by those skilled in the art that more complex systems could introduce other criteria for deciding whether to terminate the call. For example, the data transfer manager 20 could be arranged to make some determination at the time of the request as to whether the specified recipient is a valid recipient, and if not to issue the call terminate signal. By providing the user with an indication of the reason that the connection has failed, then the user can determine what action, if any, to take before re-requesting the transfer of data.

Assuming the request for a data transfer has been accepted by the data transfer manager 20, then it will be scheduled by the scheduler 110 based on information such as the time the request was made, the priority of service requested by the caller, etc. It will be appreciated by those skilled in the art that a number of techniques exist which could be used for appropriately scheduling a number of data transfer requests received by the data transfer manager 20, and accordingly the scheduling technique will not be discussed any further herein.

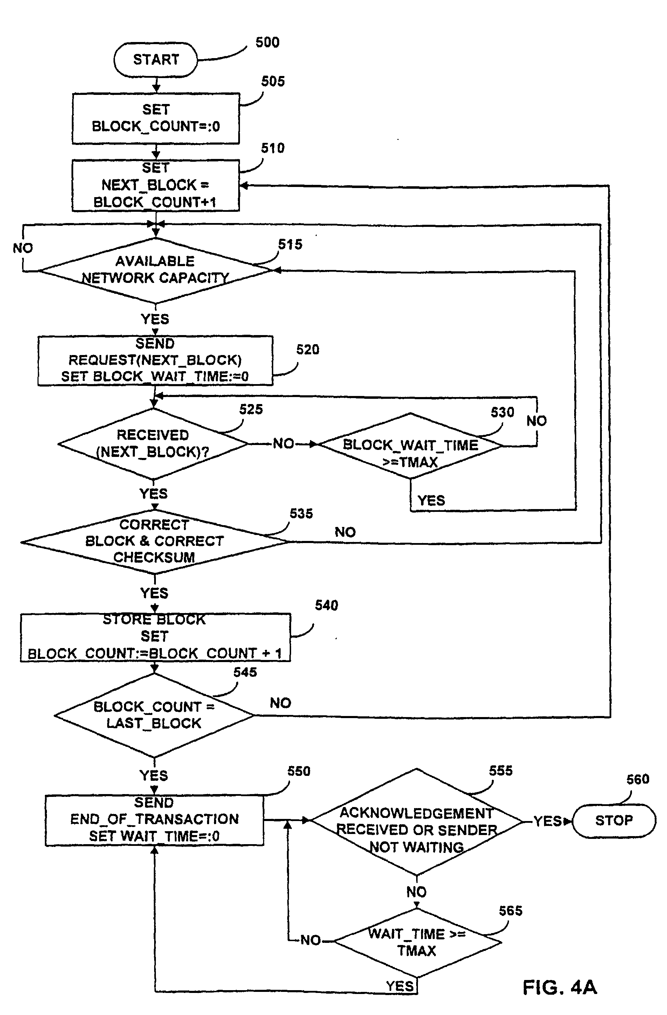

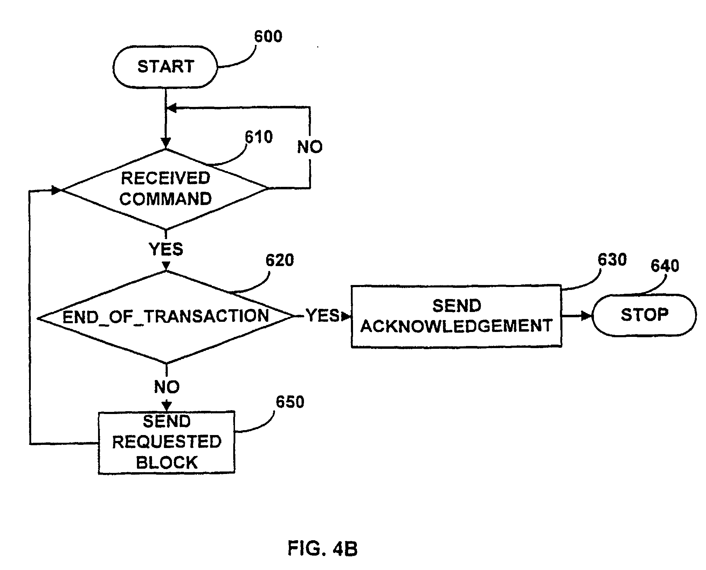

At some point, the scheduling mechanism 110 will indicate that this particular data transfer request should now be processed, and accordingly the buffering logic 120 will be invoked to transfer the data from the caller device 40 to the storage device 30. The process employed in preferred embodiments will be discussed further with reference to Figures 4A and 4B.

When it is decided to transfer data from the caller, then the process of Figure 4A is invoked at step 500, and proceeds to step 505, where the parameter "Block_Count" is set equal to zero. Then, at step 510, the parameter "Next_Block" is set equal to Block_Count + 1, such that on the first iteration "Next_Block" will identify the first block of data to be transferred.

Next, at step 515, it will be determined whether there is available network capacity for a block of data to be transferred. For the purpose of describing the preferred embodiment, it will be assumed that the blocks are of a fixed size. If there is available network capacity, then the process proceeds to step 520, where a block of data identified by the value of Next_Block is requested from the caller, and a parameter "Block_Wait_Time" is set equal to zero. Otherwise, the process stalls until there is available network capacity for a data block.

As illustrated in Figure 4B, the caller device awaits receipt of a command at step 610. In preferred embodiments, the command may be either a request for a block of data or a command to end the transaction. Hence, at step 620, it is determined whether the command is an "End_of_Transaction" command, and if not, then the command is a request for a block of data. In that event, the process proceeds to step 650, where the block of data requested is sent to the data transfer manager 20.

As illustrated in Figure 4A, the data transfer manager 20 determines at step 525 whether the block of data has been received, and if not determines at step 530 whether the Block_Wait_Time is greater than or equal to the value of Tmax set at step 450 of Figure 3B. If not, the process returns to step 525. However, if the Block_Wait_Time is greater than or equal to the value of Tmax, it is assumed that the caller has not processed the request sent at step 520, and so the process returns to step 515, such that, as network capacity allows, the request for the block of data is sent again.

Once the block of data has been received at step 525, the process proceeds to step 535 where it is determined whether the received block is the correct block (i.e. the one indicated by "Next_Block") and whether that block passes a verify procedure. It will be appreciated by those skilled in the art that a number of suitable verify procedures exist, for example the checksum information provided in the block can be used to verify whether the block has been received correctly.

If the verify procedure fails, then the process returns to step 515, to cause the block to be re-requested. Although not illustrated in Figures 4A and 4B, it will be appreciated by those skilled in the art that preferably an upper limit will be set on the number of times that a particular block is resent. If the block is not correctly received after that predetermined number of resends has taken place, then preferably the data transfer manager 20 will terminate this particular data transfer procedure, and then re-attempt the procedure after some predetermined time has elapsed. Clearly, if after repeating the procedure a number of times, it has still not been possible to correctly receive the data block, then it may be appropriate for the entire data transfer to be cancelled, and for the caller device 40 to be notified accordingly.

Assuming at step 535 it is determined that the correct block has been received, and the verify procedure indicates that the data in the received data block is correct, then the block is stored in the storage at step 540, and the value "Block_Count" is incremented by one. Then, it is determined at step 545 whether "Block_Count" equals the value of "Last_Block" determined at step 450 of Figure 3B. If not, then there are more data blocks to be received and accordingly the process returns to step 510, where the value of "Next_Block" is set equal to Block_Count + 1. The process then repeats from step 515.

If the last block has been received. then the process will branch from step 545 to step 550 where an "End_of_Transaction" command will be sent to the caller device 40. Also, a parameter "Wait_Time" will be set equal to zero. Returning to Figure 4B, once a command is received at step 610, it is determined at step 620 whether this command is the "End_of_Transaction" command. If so. the process proceeds to step 630 where an acknowledgement is sent to the data transfer manager. The process executed by the caller device 40 is then terminated at step 640.

Returning to Figure 4A, the data transfer manager determines at step 555 whether the acknowledgement signal has been received, and if so the process terminates at step 560. If the acknowledgement signal has not been received, it is determined at step 565 whether Wait_Time is greater than or equal to Tₘₐₓ, and if so the process returns to step 550 where the "End_of_Transaction" command is resent and the value of "Wait_Time is reset to zero. Otherwise, the process loops back from step 565 to step 555.

As is apparent from Figure 4B, once the caller device has sent the acknowledgement signal at step 630, the process terminates at step 640, and so the caller will not expect any further signals from the data transfer manager concerning this data transfer. However, it is possible that, due to errors in the communication, the acknowledgement signal will not be received by the data transfer manager, and hence the "End_of Transaction" command will be resent. The caller device 40 will typically respond to such a resend of the command by invoking an error handling routine to cause some default message to be sent back to the data transfer manager to the effect that the caller device 40 is not waiting for a command. Hence, at step 555, it is not only determined whether the acknowledgement signal has been received but also whether the relevant default message has been received. Receipt of either will cause the process to proceed to step 560, where the process terminates.

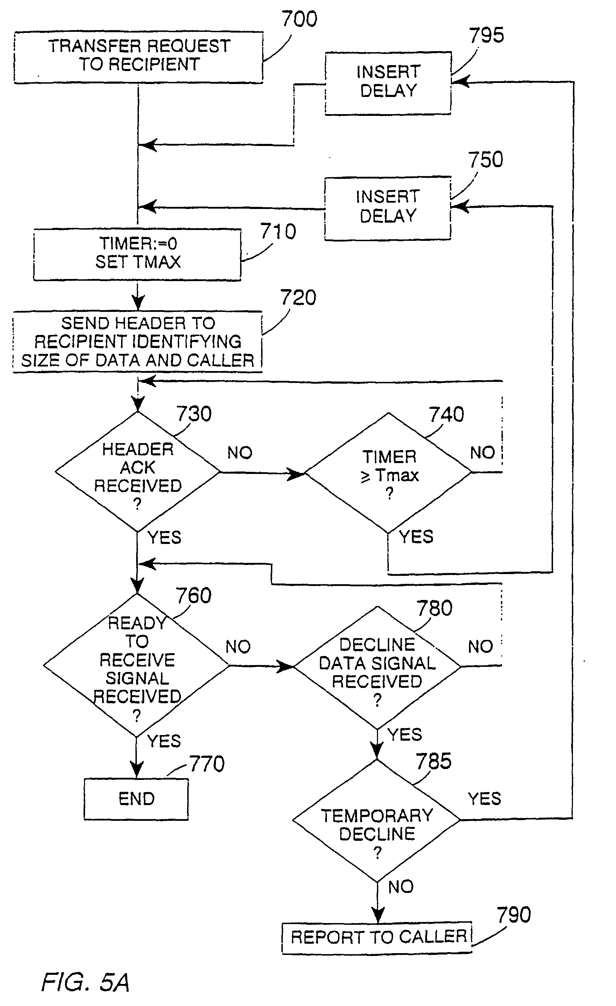

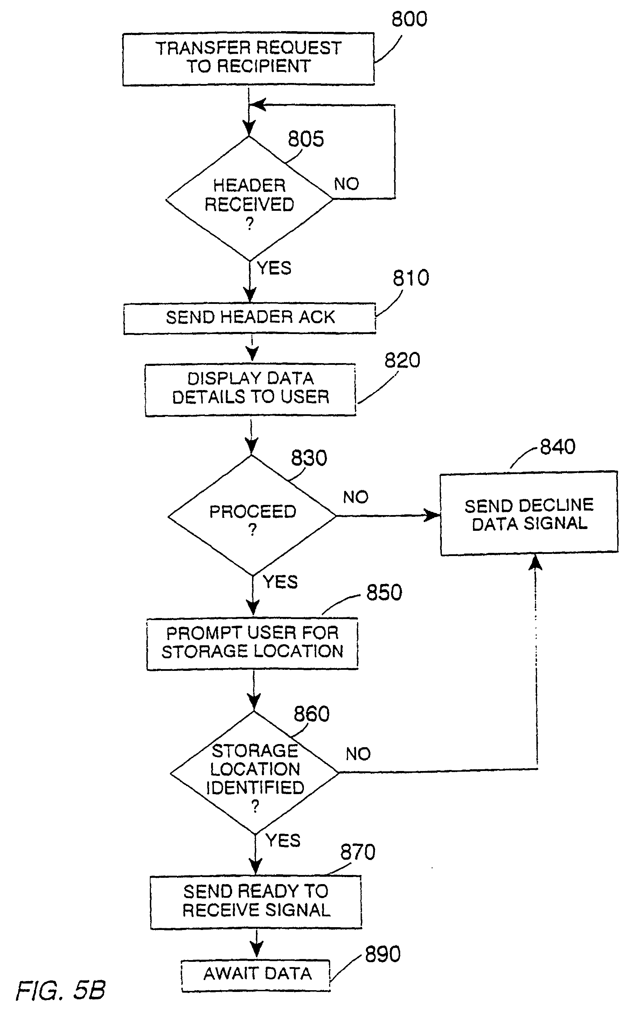

At some point after the buffering logic has begun to transfer the data from the caller to the storage device 30, the scheduler 110 will contact the transfer logic 130 to initiate the transfer of the data to the recipient device 50. As mentioned earlier, the transfer logic 130 may not be invoked until all of the data has been retrieved by the buffering logic 120 into the storage device 30. However, this is not essential, and in alternative embodiments the transfer logic can be arranged to begin transferring the data to the recipient at any time after the data has begun to be retrieved into the storage device 30 from the caller 40. Figures 5A and 5B illustrate the process performed in preferred embodiments to indicate to the recipient device 50 that there is data to be retrieved.

Firstly, as illustrated in Figure 5A. when it is determined to issue a transfer request to the recipient, then the data transfer manager 20 sets a timer equal to zero at step 710 and sets the value of a parameter Tmax, after which certain information is sent within a block header to the recipient at step 720. In preferred embodiments, this information identifies the size of data being sent and the caller 40. However, further information may also be provided, for example the type of data which is waiting to be sent to the recipient.

As illustrated in Figure 5B, the recipient device awaits receipt of the header at step 805, and when received sends a header acknowledgement to the data transfer manager at step 810.

With reference to Figure 5A, the data transfer manager 20 determines at step 730 whether the header acknowledgement has been received, and if not checks at step 740 whether the timer has yet exceeded a predetermined maximum time Tₘₐₓ. If not, the process loops back to step 730. However, if the timer has exceeded Tₘₐₓ then it is determined that the header has not been correctly received by the recipient, and accordingly the process proceeds to step 750 where a delay is inserted into the process. The process then returns to step 710 to cause the header to be resent. Although not specifically illustrated in Figure 5A, it will be appreciated by those skilled in the art that if this process is repeated a predetermined number of times, and still the header has not been acknowledged, then it may be appropriate for this part of the process to be terminated, and for the data transfer manager 20 to re-attempt the procedure after some predetermined time has elapsed.

Once the header acknowledgement has been received at step 730, then the process proceeds to step 760, where the data transfer manager awaits receipt of a "ready to receive" signal from the recipient device. Returning to Figure 5B, once the recipient has sent the header acknowledgement 810, then at step 820 it displays the data details as provided within the header to the user. Typically, this may occur as a result of the data transfer interface mechanism 60 within the recipient device causing the necessary data to be sent to a display driver within the recipient device to cause the necessary information to be displayed to the user.

In preferred embodiments, the recipient device then proceeds to step 830, where it awaits receipt of an indication from the user that the user wishes to receive the data. This may typically take the form of an appropriate input signal entered by the user through a user interface. If the user indicates that the data should not be received, then a decline data signal is sent at step 840 to the data transfer manager. Otherwise, assuming the user indicates that the data should be received, the process proceeds to step 850, where in preferred embodiments the user is prompted to provide a storage location for the data. For example, a default storage location may be displayed to the user, and the user asked to confirm that the data should be stored at that storage location, or to suggest an alternative storage location.

The process then proceeds to step 860, where the indication of an appropriate storage location is awaited. Assuming a suitable storage location is identified, then the "ready to receive" signal is sent at step 870 to the data transfer manager. However, if for any reason, the user is unable to identify a suitable storage location, for example, because there is insufficient space within the recipient device to store the data, then the process proceeds to step 840 where the decline data signal is sent. Assuming the "ready to receive" signal is sent at step 870, then the recipient enters a passive state where it awaits receipt of data at step 890.

Returning to Figure 5A, the data transfer manager determines at step 760 whether the "ready to receive" signal has been received. If not, the process proceeds to step 780, where it is determined whether the decline data signal has been received. If not the process loops to step 760. If the "ready to receive" signal is received, then the process proceeds to step 770, where the process terminates. At this point, both the data transfer manager and the recipient are ready for the transfer of data to the recipient device.

However, if at step 780, the decline data signal is received, then it is determined based on the information in the decline data signal whether the data has been temporarily declined or permanently declined (step 785). For example, the recipient may decide that he/she does not wish to receive the data at the current time, but that he/she would still wish to receive the data at some future point. In the event that the data is only declined temporarily, the process proceeds to step 795, where a delay is inserted into the process, and the process then returns to step 710. However, if the data is declined permanently, then at step 790, the data transfer manager reports that fact to the caller device 40.

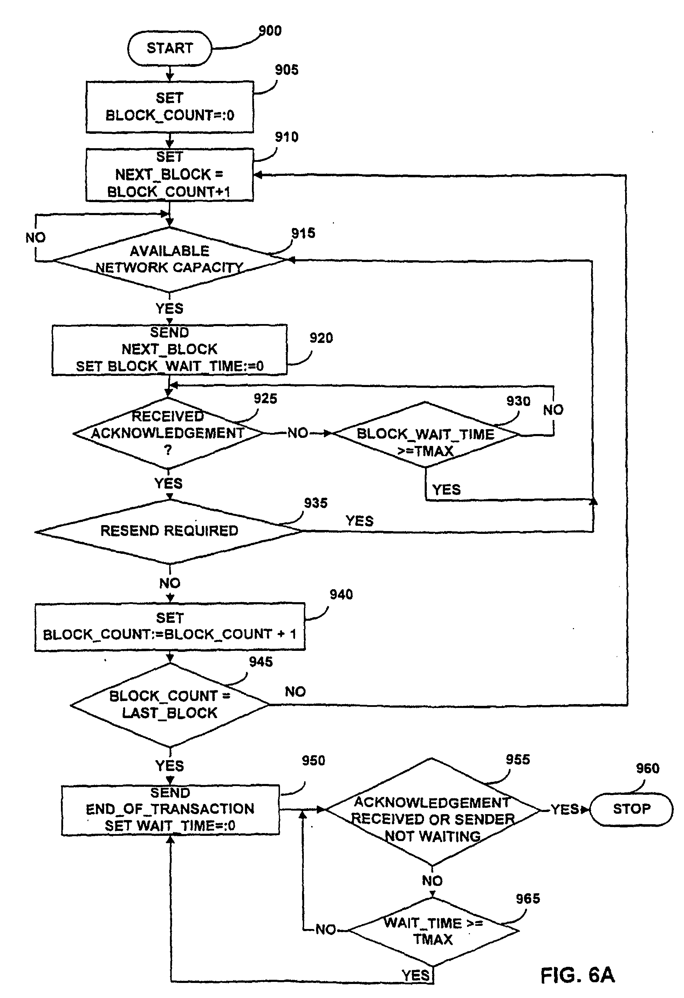

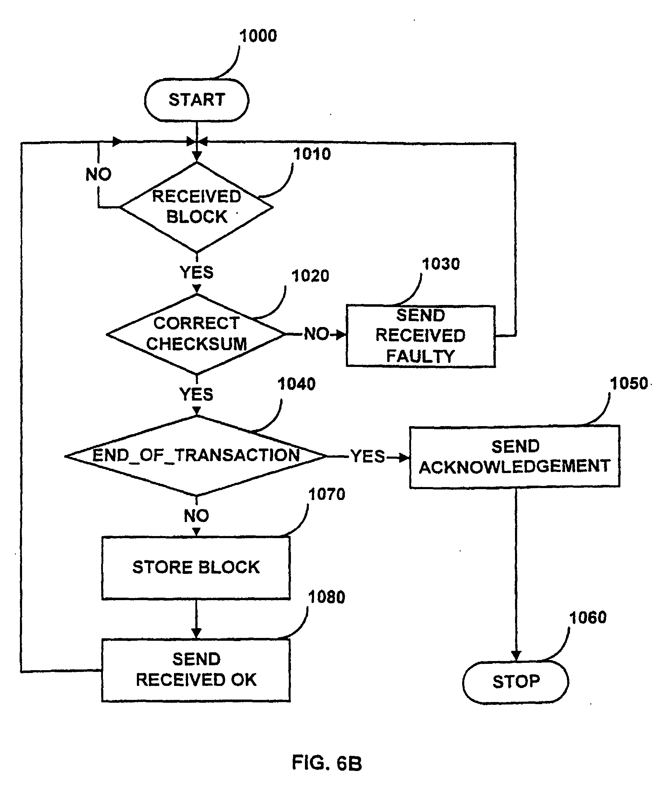

Once the process illustrated in Figures 5A and 5B has been performed, then the data transfer manager can proceed to transfer data to the recipient device, this process being illustrated in Figures 6A and 6B. As indicated in Figure 6A, once it is determined to transfer data to the recipient, then the process of Figure 6A is invoked at step 900, and proceeds to step 905, where the parameter "Block_Count" is set equal to zero. Then, at step 910, the parameter "Next_Block" is set equal to Block_Count + 1, such that on the first iteration "Next_Block" will identify the first block of data to be sent.

Next, at step 915, it is determined whether there is available network capacity for a block of data to be sent to the recipient device. If there is available network capacity, then the process proceeds to step 920, where a block of data identified by the value of Next_Block is sent to the recipient device, and a parameter "Block_Wait_Time" is set equal to zero. Otherwise, the process stalls until there is available network capacity for a data block.

As illustrated in Figure 6B, the recipient device awaits receipt of a block of data at step 1010. Once a block is received, it determines at step 1020 if the received block passes a predetermined verify procedure, for example that the checksum indicates that the data is correct. If not, the process proceeds to step 1030, where a acknowledgement signal is sent to the data transfer manager indicating that the block has been received but is faulty. The process then returns to step 1010 to await the block of data. However, if the verify procedure indicates that the received block is correct, then at step 1040 it is determined whether the block relates to an "End_of_Transaction" command. If not, it is assumed that the block of data is actual data to be received, and accordingly the block of data is stored in the storage location at step 1070, and an acknowledgement signal is then sent at step 1080 indicating that the block was received OK.

As illustrated in Figure 6A, the data transfer manager 20 determines at step 925 whether an acknowledgement signal has been received, and if not determines at step 930 whether the Block_Wait_Time is greater than or equal to the value of Tmax. If not, the process returns to step 925. However, if the Block_Wait_Time is greater than or equal to the value of Tmax, it is assumed that the caller has not processed the block sent at step 920, and so the process returns to step 915, such that, as network capacity allows, the block of data is resent.

Once the acknowledgement has been received at step 925, the process proceeds to step 935 where it is determined whether the acknowledgement signal indicates that the block of data should be resent. If the acknowledgement signal was sent at step 1030 of Figure 6B. then this will be the case and accordingly the process will return to step 915 to cause the block to be resent. Although not illustrated in Figures 6A and 6B, it will be appreciated by those skilled in the art that preferably an upper limit may be set on the number of times that a particular block is resent. If the block is not correctly received by the recipient device after that predetermined number of resends has taken place, then preferably the data transfer manager 20 will terminate this particular data transfer procedure, and then re-attempt the procedure after some predetermined time has elapsed. Clearly, if after repeating the procedure a number of times, it has still not been possible to correctly send the data block to the recipient device, then it may be appropriate for the entire data transfer to be cancelled, and for the caller device 40 to be notified accordingly.

Assuming at step 935 it is determined that the block of data does not need to be resent, then at step 940 the value of Block_Count is incremented by one. Then, it is determined at step 945 whether "Block_Count" equals the value of "Last_Block" determined at step 450 of Figure 3B. If not, then there are more data blocks to be sent and accordingly the process returns to step 910, where the value of "Next_Block" is set equal to Block_Count + 1. The process then repeats from step 915.

If the last block has been sent, then the process will branch from step 945 to step 950 where an "End_of_Transaction" command will be sent to the recipient device 50. Also, a parameter "Wait_Time" will be set equal to zero. Returning to Figure 6B, once a received block passes the verify procedure at step 1020, it is determined at step 1040 whether this block relates to the "End_of Transaction" command. If so, the process proceeds to step 1050 where an acknowledgement is sent to the data transfer manager. The process executed by the recipient device 50 is then terminated at step 1060.

Returning to Figure 6A, the data transfer manager determines at step 955 whether the acknowledgement signal has been received, and if so the process terminates at step 960. If the acknowledgement signal has not been received, it is determined at step 965 whether Wait_Time is greater than or equal to Tmax, and if so the process returns to step 950 where the "End_of_Transaction" command is resent and the value of "Wait_Time is reset to zero. Otherwise, the process loops back from step 965 to step 955.

As is apparent from Figure 6B, once the recipient device has sent the acknowledgement signal at step 1050, the process terminates at step 1060. and so the recipient will not expect any further signals from the data transfer manager concerning this data transfer. However, it is possible that, due to errors in the communication, the acknowledgement signal will not be received by the data transfer manager, and hence the "End_of Transaction" command will be resent The recipient device 50 will typically respond to such a resend of the command by invoking an error handling routine to cause some default message to be sent back to the data transfer manager to the effect that the recipient device 50 is not waiting for a command. Hence, at step 955, it is not only determined whether the acknowledgement signal has been received but also whether the relevant default message has been received. Receipt of either will cause the process to proceed to step 960, where the process terminates.

As mentioned previously, in preferred embodiments, both the caller device and the recipient device communicate via wireless links using a wireless telecommunications network such as a GSM network. In preferred embodiments, if an interruption occurs in the wireless link during the processing of any of the processes illustrated in Figures 3 to 6, then those processes are arranged to restart from an appropriate point. With regards to the transmission of blocks of data, the data transfer manager will in preferred embodiments be provided with appropriate check routines to ensure that following an interruption in the link, the processes restart with the sending of the block affected by the interruption. Hence, for example, if during the transfer of a particular block of data from the caller device to the data transfer manager, there is an interruption in the wireless link, then with reference to Figures 4A and 4B, the data transfer manager will return to step 510, and the caller device will return to step 610, thereby causing the block to be resent.

It will be appreciated by those skilled in the art that, in accordance with standard practice, a number of error handling routines would generally be provided to deal not only with errors occurring during communication due to interruptions in the link, but also to handle any other errors that might be detected during operation. For example, if the file specified by the user to be transferred does not exist at the time the transfer takes place (for example because the user has since deleted the file), then an error handling routine could be provided to notify the sender that the data transfer is no longer possible because the file does not exist.

Although a particular embodiment of the invention has been described herewith, it will be apparent that the invention is not limited thereto, and that many modifications and additions may be made within the scope of the invention.

## Claims

1. A data transfer management system (20) for a telecommunications network (10), comprising:
a request handler (100) for receiving a request from a caller device (40) for a transfer of a plurality of blocks of data to a recipient device (50) via the telecommunications network;
a network capacity indicator (140) for receiving an indication of available network capacity;
buffering means (120) arranged to determine, having regard to said network capacity indication, when to retrieve from the caller device each block of data, the buffering means being arranged to cause each retrieved block of data to be stored in a storage device (30);
transfer means (130) for indicating to the recipient device that the data transfer management system has data for the recipient device, and for determining, having regard to the network capacity indication, when to transmit each block of data from the storage device to the recipient device;
whereby the plurality of blocks of data are transferred from the caller device to the recipient device via the telecommunications network under control of the data transfer management system having regard to available network capacity.

2. A data transfer management system as claimed in Claim 1, wherein the request from the caller device comprises a call identifying a number of predetermined attributes relating to the transfer.

3. A data transfer management system as claimed in Claim 2, wherein one of said predetermined attributes is a priority indication identifying a priority to be associated with the transfer, the data transfer management system further comprising a scheduler (110) responsive to the priority indication to determine when to employ the buffering means and transfer means to retrieve the blocks of data from the caller device and to transmit the blocks of data to the recipient device.

4. A data transfer management system as claimed in Claim 2 or Claim 3, wherein the predetermined attributes comprise an indication of the size of data to be transferred and an indication of the recipient device, the request handler being arranged to indicate to the caller device that the request has been accepted if the request handler determines that there is sufficient available space in the storage device for the plurality of blocks of data.

5. A data transfer management system as claimed in Claim 4, wherein upon accepting the request, the predetermined attributes are stored by the data transfer management system, and a portion of the storage device is reserved for the plurality of blocks of data.

6. A data transfer management system as claimed in any of claims 2 to 5, wherein the predetermined attributes may specify a plurality of recipient devices, in which event the transfer means will be arranged to transmit the blocks of data to each recipient device.

7. A data transfer management system as claimed in any preceding claim, wherein the buffering means is arranged, when the network capacity indication indicates that the available network capacity is at least a predetermined threshold, to request one or more blocks of data from the caller device and to perform a verify procedure on the one or more blocks of data when received from the caller device.

8. A data transfer management system as claimed in Claim 7, wherein the buffering means is arranged to re-request the one or more blocks of data from the caller device if the verify procedure indicates an error in the one or more blocks of data as received, and to store the one or more blocks of data in the storage device if the verify procedure indicates that the one or more blocks of data as received are correct.

9. A data transfer management system as claimed in any preceding claim, wherein the transfer means is arranged to call the recipient device to indicate that the data transfer management system has data for the recipient device, the call identifying predetermined data information.

10. A data transfer management system as claimed in Claim 9, wherein the predetermined data information identifies the size of the data and an indication of the caller device.

11. A data transfer management system as claimed in Claim 9 or Claim 10, wherein the transfer means is arranged to await an accept signal from the recipient device accepting the data before beginning to transmit the data to the recipient device.

12. A data transfer management system as claimed in any preceding claim, wherein the transfer means is arranged, when the network capacity indication indicates that the available network capacity is at least a predetermined threshold, to send one or more blocks of data to the recipient device.

13. A data transfer management system as claimed in Claim 12, wherein the transfer means is arranged to resend the one or more blocks of data to the recipient device upon receipt of a resend signal from the recipient device.

14. A data transfer management system as claimed in any preceding claim, in combination with at least one caller and/or recipient device having a data transfer interface mechanism (60) for communicating with the data transfer management system, the data transfer interface mechanism comprising:
a transmission controller arranged, when data is to be transferred from the device, to issue the request to the data transfer management system identifying predetermined attributes relating to the transfer; and
a reception controller arranged, when data is to be received by the device, to be responsive to the transfer means of the data transfer management system to receive the blocks of data for storage at a predetermined location accessible by the device.

15. A data transfer management system as claimed in Claim 14, wherein the reception controller is responsive to an indication from the transfer means that the data transfer management system has data for the recipient device to request confirmation from a user of the device that the data should be transferred to the recipient device before issuing an accept signal to the transfer means.

16. A data transfer management system as claimed in Claim 15, wherein the reception controller is further arranged to seek confirmation from the device user of a storage location for the data before issuing the accept signal to the transfer means.

17. A data transfer management system as claimed in any of claims 14 to 16, wherein the reception controller is arranged to perform a verify procedure on the blocks of data as received, and to issue a resend signal to the data transfer management system to request the transfer means to resend any block or blocks of data which the verify procedure indicates are not correct.

18. A data transfer management system as claimed in any of claims 14 to 17, wherein the transmission controller is arranged, upon an indication from a user of the device that data is to be transferred from the device to a recipient device, to establish a call with the request handler and to send a number of predetermined attributes relating to the transfer to the request handler.

19. A data transfer management system as claimed in Claim 18, wherein upon receipt of an indication from the request handler that the request has been accepted, the transmission controller is arranged to terminate the call, thereby allowing the device user to make subsequent calls.

20. A method of transferring data in a telecommunications network (10), comprising:
receiving (405) a request from a caller device (40) for a transfer of a plurality of blocks of data to a recipient device (50) via the telecommunications network;
employing (515) a buffering means (120) to determine, having regard to an indication of available network capacity, when to retrieve from the caller device each block of data;
temporarily storing (540) each retrieved block of data in a storage device (30);
indicating (720) to the recipient device that data is available for the recipient device;
employing (915) a transfer means (130) to determine, having regard to the network capacity indication, when to transmit each block of data from the storage device to the recipient device;
whereby the plurality of blocks of data are transferred from the caller device to the recipient device via the telecommunications network having regard to available network capacity.

21. A method of operating a caller (40) and/or recipient device (50) to communicate with the data transfer management system as claimed in any of claims 1 to 19, the caller and/or recipient device having a data transfer interface mechanism (60), and the method comprising the steps of:
when data is to be transferred from the device, employing (320) a transmission controller within the data transfer interface mechanism to issue the request to the data transfer management system identifying predetermined attributes relating to the transfer;
when data is to be received by the device, being responsive to the data transfer management system to receive via a reception controller within the data transfer interface mechanism the blocks of data; and
storing (1070) the received blocks of data at a predetermined location accessible by the device;
whereby the blocks of data are transferred under control of the data transfer management system having regard to available network capacity.

22. A computer program configured in operation to perform the method as claimed in Claim 20 or Claim 21.

## Patentansprüche

1. Verwaltungssystem (20) für die Datenübertragung in einem Telekommunikationsnetzwerk (10), welches aufweist:
eine Anforderungshandhabung (100), um eine Anforderung von einer anrufenden Einrichtung (40) für die Übermittlung einer Mehrzahl von Datenblöcken an eine empfangende Einrichtung (50) über das Telekommunikationsnetzwerk aufzunehmen,
eine Anzeige (140) der Netzwerkkapazität, um eine Anzeige bzw. Angabe der verfügbaren Netzwerkkapazität aufzunehmen,
eine Puffereinrichtung (120), die dafür ausgelegt ist, um unter Bezug auf die Kapazitätsangabe des Netzwerkes zu bestimmen, wann von der anrufenden Einrichtung jeder Datenblock abzurufen ist,
wobei die Puffereinrichtung derart ausgelegt ist, daß sie bewirkt, daß jeder aufgenommene Datenblock in einer Speichereinrichtung (30) gespeichert wird,
eine Übertragungseinrichtung (130), um der empfangenden Einrichtung anzuzeigen, daß das Verwaltungssystem für die Datenübertragung die Daten für die empfangende Einrichtung hat und unter Berücksichtigung der Angabe der Netzwerkkapazität zu bestimmen, wann jeder Datenblock von der Speichereinrichtung an die empfangende Einrichtung zu übertragen ist,
wodurch die Mehrzahl von Datenblöcken von der anrufenden Einrichtung an die empfangende Einrichtung über das Telekommunikationsnetzwerk unter der Steuerung des Verwaltungssystems für die Datenübertragung unter Berücksichtigung der verfügbaren Netzwerkkapazität übertragen werden.

2. Verwaltungssystem für die Datenübertragung nach Anspruch 1, wobei die Anforderung von der anrufenden Einrichtung einen Anruf aufweist, der eine Anzahl vorbestimmter Eigenschaften kennzeichnet, die sich auf die Übertragung beziehen.

3. Verwaltungssystem für die Datenübertragung nach Anspruch 2, wobei eine der vorbestimmten Eigenschaften eine Prioritätsangabe ist, die eine der Übertragung zuzuordnende Priorität kennzeichnet, wobei das Verwaltungssystem für die Datenübertragung weiterhin einen Planer (110) aufweist, der auf die Prioritätsangabe reagiert, um festzustellen, wann die Puffereinrichtung und die Übertragungseinrichtung zu verwenden sind, um die Datenblöcke von der anrufenden Einrichtung zu übernehmen und die Datenblöcke an die empfangende Einrichtung zu übermitteln.

4. Verwaltungssystem für die Datenübertragung nach Anspruch 2 oder 3, wobei die vorbestimmten Eigenschaften eine Angabe der Größe der zu übertragenden Daten und eine Angabe der empfangenden Einrichtung aufweisen, wobei die Handhabungseinrichtung für die Anforderung so ausgelegt ist, daß sie der anrufenden Einrichtung anzeigt, daß die Anforderung angenommen wurde, wenn die Handhabungseinrichtung für die Anforderung feststellt, daß es für die Datenblöcke einen ausreichenden verfügbaren Raum in der Speichereinrichtung gibt.

5. Verwaltungssystem für die Datenübertragung nach Anspruch 4, wobei nach Annahme der Anforderung die vorbestimmten Eigenschaften durch das Verwaltungssystem für die Datenübertragung gespeichert werden und ein Teil der Speichereinrichtung für die Mehrzahl von Datenblöcken reserviert wird.

6. Verwaltungssystem für die Datenübertragung nach einem der Ansprüche 2 bis 5, wobei die vorbestimmten Eigenschaften eine Mehrzahl von Empfangseinrichtungen spezifizieren können, wobei die Übertragungseinrichtung in diesem Fall so ausgelegt ist, daß sie die Datenblöcke an jede empfangende Einrichtung überträgt.

7. Verwaltungssystem für die Datenübertragung nach einem der vorstehenden Ansprüche, wobei die Puffereinrichtung dafür ausgelegt ist, daß sie, wenn die Kapazitätsanzeige für das Netzwerk anzeigt, daß die verfügbare Netzwerkkapazität zumindest einen vorbestimmten Schwellwert hat, ein oder mehrere Datenblöcke von der anrufenden Einrichtung anfordert und mit dem einen oder den mehreren Datenblöcken eine Verifizierungsprozedur ausführt, wenn sie von der anrufenden Einrichtung empfangen wurden.

8. Verwaltungssystem für die Datenübertragung nach Anspruch 7, wobei die Puffereinrichtung dafür ausgelegt ist, den einen oder die mehreren Datenblöcke von der anrufenden Einrichtung erneut anzufordern, falls die Verifizierungsprozedur einen Fehler in dem einen oder den mehreren empfangenen Datenblöcken anzeigt, und den einen oder die mehreren Datenblöcke in der Speichereirichtung zu speichern, falls die Verifizierungsprozedur anzeigt, daß die einen oder mehreren Datenblöcke, die empfangen wurden, korrekt sind.

9. Verwaltungssystem für die Datenübertragung nach einem der vorstehenden Ansprüche, wobei die Übertragungseinrichtung dafür ausgelegt ist, die empfangende Einrichtung anzurufen, um anzuzeigen, daß das Verwaltungssystem für die Datenübertragung Daten für die empfangende Einrichtung hat, wobei der Anruf vorbestimmte Dateninformation kennzeichnet bzw. angibt.

10. Verwaltungssystem für die Datenübertragung nach Anspruch 9, wobei die entsprechende Dateninformation die Größe der Daten und eine Angabe der anrufenden Einrichtung spezifiziert.

11. Verwaltungssystem für die Datenübertragung nach Anspruch 9 oder 10, wobei die Übertragungseinrichtung dafür ausgelegt ist, auf ein Annahmesignal von der empfangenden Einrichtung zu warten, daß sie die Daten empfängt, bevor sie damit beginnt, die Daten an die empfangende Einrichtung zu übertragen.

12. Verwaltungssystem für die Datenübertragung nach einem der vorstehenden Ansprüche, wobei die Übertragungseinrichtung dafür ausgelegt ist, daß sie, wenn die Netzwerkkapazitätsangabe anzeigt, daß die verfügbare Netzwerkkapazität zumindest über einem vorbestimmten Schwellwert liegt, einen oder mehrere Datenblöcke an die empfangende Einrichtung sendet.

13. Verwaltungssystem für die Datenübertragung nach Anspruch 12, wobei die Übertragungseinrichtung dafür ausgelegt ist, den einen oder die mehreren Datenblöcke erneut an die Empfangseinrichtung zu senden, wenn ein Neusendesignal von der Empfangseinrichtung empfangen wurde.

14. Verwaltungssystem für die Datenübertragung nach einem der vorstehenden Ansprüche in Kombination mit zumindest einer anrufenden und/oder empfangenden Einrichtung, die einen Schnittstellenmechanismus (60) für die Datenübertragung für die Kommunikation mit dem Verwaltungssystem für die Datenübertragung haben, wobei der Schnittstellenmechanismus der Datenübertragung aufweist:
eine Sendesteuerung, die derart ausgelegt ist, daß sie, wenn Daten von der Einrichtung übertragen werden sollen, die Anforderung an das Verwaltungssystem für die Datenübertragung ausgibt, welche vorbestimmte Eigenschaften, die sich auf die Übertragung beziehen, kennzeichnet,
eine Empfangssteuerung, die derart ausgelegt ist, daß sie, wenn Daten durch die Einrichtung empfangen werden sollen, auf die Übertragungseinrichtung des Verwaltungssystems für die Datenübertragung reagiert, um Datenblöcke für die Speicherung an einer vorbestimmten Stelle empfangen, welche für die Einrichtung zugänglich ist.

15. System für die Datenübertragung nach Anspruch 14, wobei die Empfangssteuerung auf eine Anzeige von der Übertragungseinrichtung reagiert, daß das Verwaltungssystem für die Datenübertragung Daten für die empfangende Einrichtung hat, um so die Bestätigung von einem Benutzer der Einrichtung anzufordem, daß die Daten an die empfangende Einrichtung übertragen werden sollen, bevor ein Annahmesignal an die Übertragungseinrichtung ausgegeben wird.

16. Verwaltungssystem für die Datenübertragung nach Anspruch 15, wobei die Empfangssteuerung weiterhin dafür ausgelegt ist, daß sie um eine Bestätigung einer Speicherstelle für die Daten von dem Benutzer der Einrichtung nachsucht, bevor an die Übertragungseinrichtung ein Annahmesignal ausgegeben wird.

17. Verwaltungssystem für die Datenübertragung nach einem der Ansprüche 14 bis 16, wobei die Empfangssteuerung dafür ausgelegt ist, einen Verifizierungsvorgang mit den Datenblöcken durchzuführen, wenn sie empfangen werden, und um ein Neusendesignal an das Verwaltungssystem für die Datenübertragung auszugeben, um bei der Übertragungseinrichtung anzufordern, daß sie irgendeinen Block oder Blöcke von Daten erneut sendet, für welche der Verifizierungsvorgang anzeigt, daß sie nicht korrekt waren.

18. Verwaltungssystem für die Datenübertragung nach einem der Ansprüche 14 bis 17, wobei die Übertragungssteuerung dafür ausgelegt ist, daß sie nach einer Anzeige von einem Benutzer der Einrichtung, daß die Daten von der Einrichtung an eine Empfangseinrichtung übertragen werden sollen, einen Anruf bei der Handhabungseinrichtung für die Anforderung bereitstellt, um eine Anzahl vorbestimmter Eigenschaften an die Handhabungseinrichtung für die Anforderung zu übersenden, welche sich auf die Übertragung beziehen.

19. Verwaltungssystem für die Datenübertragung nach Anspruch 18, wobei im Falle des Empfangs einer Anzeige von der Handhabungseinrichtung für die Anforderung, daß die Anforderung angenommen worden ist, die Übermittlungssteuerung dafür ausgelegt ist, den Anruf zu beenden, um damit dem Benutzer der Einrichtung das Durchführen nachfolgender Anrufe zu ermöglichen.

20. Verfahren zum Übertragen von Daten in einem Telekommunikationsnetzwerk (10), welches aufweist:
Empfangen (405) einer Anforderung von einer anrufenden Einrichtung (40) zwecks Übertragung einer Mehrzahl von Datenblöcken an eine Empfangseinrichtung (50) über das Telekommunikationsnetzwerk,
Verwenden (515) einer Puffereinrichtung (120), um bezüglich einer Anzeige der verfügbaren Netzwerkkapazität zu bestimmen, wann ein jeweiliger Datenblock von der Anrufereinrichtung aufgenommen wird,
zeitweiliges Speichern (540) jedes aufgenommenen Datenblockes in einer Speichereinrichtung (30), Anzeigen (720) an die Empfangseinrichtung, daß Daten für die Empfangseinrichtung verfügbar sind, Verwendung (915) einer Übertragungseinrichtung (130), um unter Berücksichtigung der Angabe der Netzwerkkapazität zu bestimmen, wann der jeweilige Datenblock von der Speichereinrichtung zu der empfangenden Einrichtung übertragen werden soll,
wodurch die Mehrzahl von Datenblöcken von der anrufenden Einrichtung an die Empfangseinrichtung über das Telekommunikationsnetzwerk unter Berücksichtigung der verfügbaren Netzwerkkapazität übertragen werden.

21. Verfahren zum Betreiben einer anrufenden (40) und/oder empfangenden Einrichtung (50), um mit dem Verwaltungssystem für die Datenübertragung nach einem der Ansprüche 1 bis 19 eine Kommunikation durchzuführen, wobei die anrufende und/oder empfangende Einrichtung einen Schnittstellenmechanismus (60) für die Datenübertragung haben und wobei das Verfahren die Schritte aufweist:
wenn Daten von der Einrichtung übertragen werden sollen, Verwenden (320) einer Übermittlungssteuerung in dem Schnittstellenmechanismus für die Datenübertragung, um an das Verwaltungssystem für die Datenübertragung die Anforderung auszugeben, welche vorbestimmte Eigenschaften in Bezug auf die Übertragung identifiziert bzw, kennzeichnet,
wenn Daten durch die Einrichtung empfangen werden sollen in Reaktion auf das Verwaltungssystem für die Datenübertragung, Empfangen der Datenblöcke über eine Empfangssteuerung innerhalb des Schnittstellenmechanismus für die Datenübertragung, und
Speichern (1070) der empfangenen Datenblöcke an einer vorbestimmten Stelle, welche für die Einrichtung zugänglich ist,
wobei die Datenblöcke unter der Steuerung des Verwaltungssystems für die Datenübertragung unter Berücksichtigung der verfügbaren Netzwerkkapazität übertragen werden.

22. Computerprogramm, welches für einen Betrieb zur Durchführung des Verfahrens nach den Ansprüchen 20 oder 21 ausgestaltet ist.

## Revendications

1. Un système de gestion de transfert de données (20) pour réseau de télécommunications (10), comprenant :
un gestionnaire de requête (100) pour recevoir une requête d'un dispositif appelant (40) afin de transférer une pluralité de blocs de données à un dispositif récepteur (50) via le réseau de télécommunications ;
un indicateur de capacité de réseau (140) pour recevoir une indication sur la capacité de réseau disponible ;
un moyen de mise en mémoire tampon (120) aménagé pour déterminer, en tenant compte de ladite indication de capacité de réseau, le moment où récupérer chaque bloc de données sur le dispositif appelant, le moyen de mise en mémoire tampon étant aménagé pour provoquer l'enregistrement dans un dispositif de mémorisation (30) de chaque bloc de données récupéré ;
un dispositif de transfert (130) pour indiquer au dispositif récepteur que le système de gestion de transfert de données a des données pour le dispositif récepteur, et pour déterminer, en tenant compte de l'indication de capacité de réseau, le moment où envoyer chaque bloc de données du dispositif de mémorisation au dispositif récepteur ;
par lequel la pluralité des blocs de données sont transférés du dispositif appelant au dispositif récepteur via le réseau de télécommunications sous la commande du système de gestion de transfert de données en tenant compte de la capacité de réseau disponible.

2. Un système de gestion de transfert de données selon la revendication 1, dans lequel la requête provenant du dispositif appelant comprend un appel identifiant un nombre d'attributs prédéfinis relatifs au transfert.

3. Un système de gestion de transfert de données selon la revendication 2, dans lequel l'un desdits attributs prédéfinis est une indication de priorité identifiant une priorité à associer au transfert, le système de gestion de transfert de données comprenant de plus un programmateur (110) sensible à l'indication de priorité pour déterminer le moment où employer le moyen de mise en mémoire tampon et le moyen de transfert pour récupérer les blocs de données sur le dispositif appelant et pour envoyer les blocs de données au dispositif récepteur.

4. Un système de gestion de transfert de données selon la revendication 2 ou la revendication 3, dans lequel les attributs prédéfinis comprennent une indication sur la taille des données à transférer et une indication sur le dispositif récepteur, le gestionnaire de requête étant aménagé pour indiquer au dispositif appelant que la requête a été acceptée si le gestionnaire de requête détermine qu'il y a un espace suffisant dans le dispositif de mémorisation pour la pluralité des blocs de données.

5. Un système de gestion de transfert de données selon la revendication 4, dans lequel, au moment de l'acceptation de la requête, les attributs prédéfinis sont mémorisés par le système de gestion de transfert de données et une partie du dispositif de mémorisation est réservée à la pluralité des blocs de données.

6. Un système de gestion de transfert de données selon l'une des revendications 2 à 5, dans lequel les attributs prédéfinis peuvent spécifier une pluralité de dispositifs récepteurs, auquel cas le dispositif de transfert sera aménagé pour envoyer les blocs de données à chaque dispositif récepteur.

7. Un système de gestion de transfert de données selon l'une des revendications précédentes, dans lequel le moyen de mise en mémoire tampon est aménagé, lorsque l'indication de capacité de réseau indique que la capacité de réseau disponible est au moins un seuil prédéterminé, pour demander un ou plusieurs blocs de données au dispositif appelant et pour effectuer une procédure de vérification sur un ou plusieurs blocs de données au moment de leur réception du dispositif appelant.

8. Un système de gestion de transfert de données selon la revendication 7, dans lequel le moyen de mise en mémoire tampon est aménagé pour redemander un ou plusieurs blocs de données au dispositif appelant si la procédure de vérification indique une erreur dans un ou plusieurs blocs de données reçus, et pour mémoriser un ou plusieurs blocs de données dans le dispositif de mémorisation si la procédure de vérification indique qu'un ou plusieurs blocs de données reçus sont corrects.

9. Un système de gestion de transfert de données selon l'une des revendications précédentes, dans lequel le moyen de transfert est aménagé pour appeler le dispositif récepteur à indiquer que le système de gestion de transfert de données a des données pour le dispositif récepteur, l'appel identifiant l'information de donnée prédéterminée.

10. Un système de gestion de transfert de données selon la revendication 9, dans lequel l'information de donnée prédéterminée identifie la taille des données et fournit une indication sur le dispositif appelant.

11. Un système de gestion de transfert de données selon la revendication 9 ou la revendication 10, dans lequel le moyen de transfert est aménagé pour attendre un signal d'acceptation du dispositif récepteur acceptant la donnée avant d'envoyer la donnée au dispositif récepteur.

12. Un système de gestion de transfert de données selon l'une des revendications précédentes, dans lequel le moyen de transfert est aménagé, lorsque l'indication de capacité de réseau indique que la capacité de réseau disponible est au moins un seuil prédéterminé, pour envoyer un ou plusieurs blocs de données au dispositif récepteur.

13. Un système de gestion de transfert de données selon la revendication 12, dans lequel le moyen de transfert est aménagé pour renvoyer un ou plusieurs blocs de données au dispositif récepteur à la réception d'un signal de renvoi par le dispositif récepteur.

14. Un système de gestion de transfert de données selon l'une des revendications précédentes, en combinaison avec au moins un dispositif appelant et/ou récepteur ayant un mécanisme d'interface de transfert de données (60) pour communiquer avec le système de gestion de transfert de données, le mécanisme d'interface de transfert de données comprenant :
un contrôleur d'émission aménagé, lorsqu'une donnée doit être transférée à partir du dispositif, pour délivrer la requête au système de gestion de transfert de données identifiant des attributs prédéfinis relatifs au transfert ; et
un contrôleur de réception aménagé, lorsqu'une donnée doit être reçue par le dispositif, pour être sensible au moyen de transfert du système de gestion de transfert de données pour recevoir les blocs de données pour enregistrement à un emplacement prédéterminé accessible au dispositif.

15. Un système de gestion de transfert de données selon la revendication 14, dans lequel le contrôleur de réception est sensible à une indication provenant du moyen de transfert indiquant que le système de gestion de transfert de données a des données pour le dispositif récepteur pour demander confirmation à un utilisateur du dispositif que les données devraient être transférées au dispositif récepteur avant la délivrance d'un signal d'acceptation au moyen de transfert.

16. Un système de gestion de transfert de données selon la revendication 15, dans lequel le contrôleur de réception est en outre aménagé pour chercher confirmation du dispositif utilisateur d'un emplacement de mémorisation pour la donnée avant la délivrance du signal d'acceptation au moyen de transfert.

17. Un système de gestion de transfert de données selon l'une des revendications 14 à 16, dans lequel le contrôleur de réception est aménagé pour effectuer une procédure de vérification sur les blocs de données reçus, et pour délivrer un signal de renvoi au système de gestion de transfert de données pour demander au moyen de transfert de renvoyer un bloc ou des blocs de données que la procédure de vérification indique comme étant incorrects.

18. Un système de gestion de transfert de données selon l'une des revendications 14 à 17, dans lequel le contrôleur d'émission est aménagé pour, à réception par un utilisateur du dispositif d'une indication indiquant qu'une donnée doit être transférée du dispositif à un dispositif récepteur, pour établir une communication avec le gestionnaire de requête et pour envoyer un nombre d'attributs prédéfinis relatifs au transfert au gestionnaire de requête.

19. Un système de gestion de transfert de données selon la revendication 18, dans lequel, à réception d'une indication par le gestionnaire de requête que la requête a été acceptée, le contrôleur d'émission est aménagé pour mettre fin à la communication, permettant ainsi à l'utilisateur du dispositif de procéder à des appels ultérieurs.

20. Procédé de transfert de données dans un réseau de télécommunications (10), comprenant :
la réception (405) d'une requête par un dispositif appelant (40) pour transférer une pluralité de blocs de données à un dispositif récepteur (50) via le réseau de télécommunications ;
l'emploi (515) d'un moyen de mise en mémoire tampon (120) pour déterminer, en tenant compte d'une indication de la capacité de réseau disponible, au moment de récupérer chaque bloc de données sur le dispositif appelant ;
l'enregistrement temporaire (540) dans un dispositif de mémorisation (30) de chaque bloc de données récupéré ;
l'indication (720) au dispositif récepteur qu'une donnée est disponible pour le dispositif récepteur ;
l'emploi (915) d'un moyen de transfert (130) pour déterminer, en tenant compte de l'indication de capacité de réseau, le moment où transmettre chaque bloc de données du dispositif de mémorisation au dispositif récepteur ;
ce par quoi la pluralité des blocs de données sont transférés du dispositif appelant au dispositif récepteur via le réseau de télécommunications en tenant compte de la capacité de réseau disponible.

21. Procédé d'exploitation d'un dispositif appelant (40) et/ou récepteur (50) pour communiquer avec le système de gestion de transfert de données selon l'une des revendications 1 à 19, le dispositif appelant et/ou récepteur ayant un mécanisme d'interface de transfert de données (60), et le procédé comprenant les étapes suivantes :
lorsqu'une donnée doit être transférée à partir du dispositif, emploi (320) d'un contrôleur d'émission dans le mécanisme d'interface de transfert de données pour délivrer la requête au système de gestion de transfert de données identifiant les attributs prédéfinis relatifs au transfert ;
lorsqu'une donnée doit être reçue par le dispositif, sensibilité au système de gestion de transfert de données pour recevoir les blocs de données via un contrôleur de réception dans le mécanisme d'interface de transfert de données ; et
mémorisation (1070) des blocs de données reçus à un emplacement prédéterminé accessible au dispositif ;
ce par quoi les blocs de données sont transférés sous la commande du système de gestion de transfert de données en tenant compte de la capacité de réseau disponible.

22. Un programme informatique configuré en exploitation pour mettre en oeuvre le procédé selon la revendication 20 ou la revendication 21.
